# EUROPEAN PATENT APPLICATION

(11) **EP 2 703 959 A1**
(43) Date of publication of application: **05.03.2014**
(21) Application number: 11864202.4
(22) Date of filing: 22.07.2011
(51) Int. Cl.: G06F 3/033

(54) **TERMINAL AND METHOD FOR INPUTTING IN TERMINAL USING POSITIVE AND NEGATIVE ENDS OF STYLUS**

(30) Priority: 28.04.2011 CN 201110108685
(71) Applicant: ZTE Corporation, Shenzhen, Guangdong 518057 (CN)
(72) Inventor: HUANG, Lianfang, Shenzhen Guangdong 518057 (CN)
(74) Representative: Modiano, Micaela Nadia
(86) International application number: PCT/CN2011/077476
(87) International publication number: WO 2012/145970

(57) **Abstract**

The disclosure discloses a terminal including a terminal body and a stylus, wherein the stylus has two opposite ends that are different from each other, and the terminal body includes: a setting unit configured to set corresponding operation information; an identifying unit configured to obtain identifying information; a touch screen controlling unit configured to obtain movement information of the stylus; a processing unit configured to respond with an operation corresponding to the contacting end of the stylus according to the corresponding operation information, the identifying information and the movement information of the stylus; and a displaying unit configured to display a result of the operation corresponding to the contacting end of the stylus. The disclosure further discloses a method for inputting to a terminal using two opposite ends of a stylus. The solution of the disclosure solves a problem that the two opposite ends of an existing stylus fail to operate in different modes, leading to more fun in using the stylus as well as an enhanced user experience.

## Description

### TECHNICAL FIELD

The present disclosure relates to the field of mobile communication technology, and in particular to a terminal and a method for inputting to a terminal using two opposite ends of a stylus.

### BACKGROUND

With development of communication technology, and continued popularization of a terminal (such as a mobile phone, a Tablet PC, or the like) with a touch screen, usage of a stylus grows continuously. In addition to writing or drawing, the stylus of a conventional terminal further serves as a thermometer, a mouse, a remote control or the like, enriching the usage of the terminal with a touch screen.

However, when writing, drawing, clicking or dragging with the stylus, an interface therefor is monotonic; moreover, a thickness, a colour, or a mode of a stroke may be altered only through a menu or an additional function of the stylus in the conventional art, which is inconvenient. In addition, there is no difference in functions of two opposite ends of the stylus, or only one end thereof has the function of the stylus, and thus the monotonic function makes it neither easy nor fun to use the stylus, which reduces the user experience.

### SUMMARY

A technical problem to be solved by the disclosure is to provide a terminal and a method for inputting to the terminal using two opposite ends of a stylus, so as to solve a problem in the relevant art that only one end of the stylus may be used for inputting and function thereof is monotonous.

To this end, one aspect of the disclosure provides a terminal including a terminal body and a stylus, wherein the stylus has two opposite ends that are different from each other, and the terminal body includes:
a setting unit configured to set corresponding operation information, wherein the corresponding operation information indicates an operation corresponding to a respective end of the two opposite ends of the stylus when the respective end makes contact with a touch screen of the terminal body;
an identifying unit configured to obtain identifying information, wherein the identifying information identifies a contacting end of the two opposite ends that is making contact with the touch screen;
a touch screen controlling unit configured to obtain movement information of the stylus, which movement information comprises a location of a point of contact and a track of the contacting end obtained when the contacting end of the stylus makes contact with the touch screen;
a processing unit configured to respond with an operation corresponding to the contacting end of the stylus according to the corresponding operation information, the identifying information and the movement information of the stylus; and
a displaying unit configured to display a result of the operation corresponding to the contacting end of the stylus.

Furthermore, the two opposite ends of the stylus may have different shapes, sizes, numbers of nibs, or nib materials.

Furthermore, the touch screen may be a resistive touch screen.

Furthermore, the touch screen may be a capacitive touch screen.

Another aspect of the disclosure provides a method for inputting to a terminal using two opposite ends of a stylus, including:
setting corresponding operation information, wherein the corresponding operation information indicates an operation corresponding to a respective end of the two opposite ends of the stylus when the respective end makes contact with a touch screen of the terminal body, wherein the stylus has two opposite ends that are different from each other;
obtaining identifying information and movement information of the stylus, wherein the identifying information identifies a contacting end of the two opposite ends that is making contact with the touch screen, and the movement information of the stylus comprises a location of a point of contact and a track of the contacting end obtained when the contacting end of the stylus makes contact with the touch screen; and
responding with an operation corresponding to the contacting end of the stylus according to the corresponding operation information, the identifying information and the movement information of the stylus, and displaying a result of the operation corresponding to the contacting end of the stylus.

The method may further include:
when a device other than the stylus makes contact with the touch screen, identifying a contacting end of the device as a forward end of the two opposite ends of the stylus.

Furthermore, a forward end of the two opposite ends of the stylus may include one nib, and a back end of the two opposite ends of the stylus may include two nibs.

Furthermore, when the touch screen is a resistive touch screen, the obtained location of the point of contact may be the location of a detected midpoint between two points of contact when the back end of the two opposite ends of the stylus makes contact with the touch screen.

Furthermore, when the touch screen is a capacitive touch screen, the obtained location of the point of contact may be the calculated location of a midpoint of a line connecting two detected points of contact when the back end of the two opposite ends of the stylus makes contact with the touch screen.

Furthermore, the contacting end of the stylus may make contact with the touch screen through writing, drawing, clicking or dragging.

The advantages of the disclosure are as follows:
By configuring inputting operations of the two opposite ends of the stylus, both ends of the stylus are allowed to perform different operations, solving a problem in the relevant art that the two opposite ends of an existing stylus fail to operate in different modes, leading to more fun in using the stylus as well as an enhanced user experience. In addition, the anticipated effects may be achieved just by making minor modification to the conventional terminal without any major change of software and hardware. Therefore, the solution of the present disclosure has the advantages of a low cost and a simple structure.

### BRIEF DESCRIPTION OF THE DRAWINGS

Fig. 1 is a schematic diagram of a structure of a terminal according to an embodiment of the present disclosure; and
Fig. 2 is a flowchart of a method for inputting to a terminal using two opposite ends of a stylus according to an embodiment of the present disclosure.

### DETAILED DESCRIPTION

In order to solve a problem that inputting can be implemented with only one end of an existing stylus, and a function thereof is monotonous, the present disclosure provides a terminal and a method for inputting to a terminal using both opposite ends (namely, a forward end and a back end) of a stylus. The disclosure is further elaborated below with reference to the drawings and embodiments. It should be understood that an embodiment described herein is only for explanation rather than limiting the protection scope of the present disclosure.

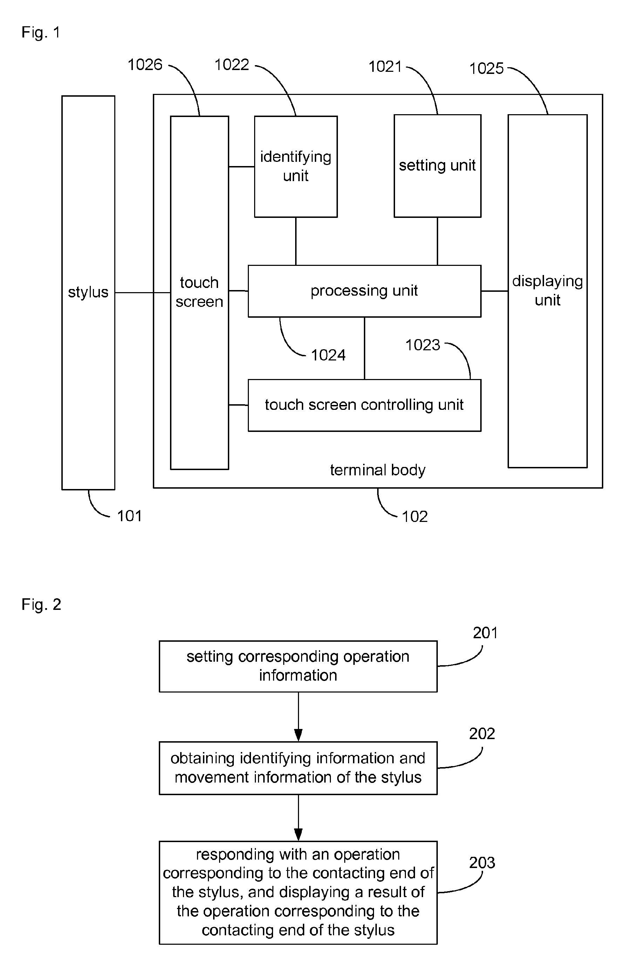

As shown in fig.1, a terminal according to an embodiment of the disclosure includes a stylus 101 and a terminal body 102, wherein two opposite ends of the stylus 101 are different. The terminal body 102 includes: a setting unit 1021, an identifying unit 1022, a touch screen controlling unit 1023, a processing unit 1024, a displaying unit 1025 and a touch screen 1026.

The setting unit 1021 is configured to set corresponding operation information which refers to an operation corresponding to a respective end of the two opposite ends of the stylus 101 when the respective end makes contact with the touch screen 1026. Generally, the stylus 101 makes contact with the touch screen 1026 by way of writing, drawing, clicking or dragging. Therefore, different operations may be set for different ways of touching. For example, when the stylus is set to correspond to writing, the two opposite ends of the stylus 101 may be set to correspond to different fonts. For example, the forward end may correspond to an input font of Song Ti and the back end may correspond to an input font of Times New Roman. Alternatively, the two opposite ends may correspond to a large-size font and a small-size font, respectively. When the stylus is set to correspond to drawing, the two opposite ends of the stylus may be configured to correspond to different colours. For example, the forward end may correspond to a red input line and the back end may correspond to a yellow input line; or, operations of inputting strokes of different thickness may be done with the two opposite ends. In addition, the two opposite ends of the stylus may be configured to correspond to an operation of writing and of painting, respectively; a stroke in writing may be identified automatically and a stroke in drawing may be saved automatically without identification. Alternatively, the two opposite ends may be configured to correspond to an operation of drawing and of erasing, respectively, where the function of the end for erasing is similar to that of an eraser. When clicking is performed, the two opposite ends of the stylus 101 may be configured to correspond to different controlling operations. For example, an input from the forward end may mean a start operation and an input from the back end may mean a quit operation. When dragging is performed, the two opposite ends of the stylus 101 may be configured to correspond to different page turning operations. For example, an input from the forward end may mean a page-down operation and an input from the back end may mean a page-up operation. Of course, operations corresponding to the stylus 101 are not limited to those mentioned above. The stylus 101 may be further configured as follows. For example, when the two opposite ends are set to correspond to a left button and a right button, respectively, the left button is for selecting and opening, and the right button is for popup of an option menu which may include options such as copy, paste, cut, and the like.

When an operation corresponding to a respective end of the two opposite ends is set, an operation corresponding to the other end of the two opposite ends is usually set accordingly. For example, when the forward end is set to correspond to a left button, the back end is set to correspond to a right button; when the forward end is set to correspond to a start operation, the back end is set to correspond to a quit operation; when the forward end is set to correspond to a first colour, the back end is set to correspond to a second colour; when the forward end is set to correspond to a thick stroke, the back end is set to correspond to a thin stroke; when the forward end is set to correspond to writing, the back end is set to correspond to drawing; when the forward end is set to correspond to a large-size font, the back end is set to correspond to a small-size font; and when the forward end is set to correspond to writing and drawing, the back end is set to correspond to erasing. In addition, the two opposite ends of the stylus 101 may be used for different touch screens 1026. For example, the forward end of stylus 101 may be used for a capacitive touch screen, while the back end may be used for a resistive touch screen.

If an operation corresponding to a respective end of the two opposite ends of the stylus 101 is not set by the terminal body 102, both ends will operate in a common mode, in which inputs of the two opposite ends correspond to a same operation; alternatively, input may be done with only one of the two opposite ends of the stylus 101. In addition, when input is done with an object other than the stylus 101, such as a finger or the like, the input is taken as being done by the forward end of the stylus 101.

The identifying unit 1022 is configured to obtain identifying information. The identifying information identifies a contacting end, of the two opposite ends of stylus 101, that is making contact with the touch screen 1026. For example, the identification may be performed according to the difference between the two opposite ends of the stylus 101. For example, when one of the two opposite ends includes one nib and the other includes two nibs, the contacting end may be determined by identifying a number of points of contact of the stylus with the touch screen 1026. If the two opposite ends of the stylus have different sizes, the contacting end may be determined by identifying the size of a point of contact on the touch screen 1026. By analogy, a corresponding way of identification is used according to a difference between the two opposite ends of the stylus 101.

The touch screen controlling unit 1023 is configured to obtain movement information of the stylus 101; the movement information includes a location of a point of contact and a track of the contacting end obtained when the contacting end of the stylus 101 makes contact with the touch screen 1026. That is, the touch screen controlling unit 1023 reads and calculates coordinates of the point of contact according to the location of the point of contact; if there are two points of contact at the same time, the recorded coordinates are the coordinates of a midpoint of the line connecting the two points of contact. The touch screen controlling unit 1023 stores a stroke according to locations of respective points of contact in writing or drawing.

The processing unit 1024 is configured to respond with an operation corresponding to the contacting end of the stylus 101 according to the corresponding operation information, the identifying information and the movement information of the stylus 101. For example, given that the forward end of the two opposite ends of the stylus 101 is configured to correspond to a red input, the contacting end is identified as the forward end, and the movement information of stylus 101 indicates the drawing operation, then the terminal responds by drawing a red line on the track of the stylus 101 on the screen.

The displaying unit 1025 is configured to display a result of the operation corresponding to the contacting end of the stylus 101, that is, to display the interface before and after the operation of the stylus 101 before the user.

The two opposite ends of the stylus may have different shapes, sizes, numbers of nibs, or nib materials, so as to facilitate identification by the identifying unit 1022. In an embodiment of the present disclosure, as long as the two opposite ends of stylus 101 are different from each other, they can be identified by the identifying unit 1022. Therefore, ways of distinguishing the two ends are not limited to those listed above, any difference that allows the two opposite ends of stylus 101 to be distinguished and identified by the identifying unit 1022 will work, which will not be further elaborated herein.

The touch screen 1026 is mainly divided into two types, namely, a resistive touch screen and a capacitive touch screen. The resistive touch screen consists of two sets of resistance wires that are arranged transversely and longitudinally, respectively, and are spaced apart from each other. When the touch screen is touched, the two sets of resistance wires make contact with each other at the touch point, thus changing a respective resistance of a transverse layer and of a longitudinal layer, and therefore changing a respective voltage. Transverse and longitudinal positions of the touch point are detected respectively by detecting transverse and longitudinal voltages. In a case of two touch points, what is detected by the resistive touch screen is the midpoint between the two touch points. The capacitive touch screen supports multi-point detection, i.e., information on the location of each of the two touch points during touching may be provided respectively. When a stylus 101 with a back end of two nibs is used for writing or drawing, the midpoint on the line connecting the two touch points is taken as the location of the track. For example, if the two nibs are located at (220,170) and (224,176), respectively, the coordinates of the point of contact of the stylus 101 are (222, 173).

In addition, an embodiment of the present disclosure further provides a method for inputting to a terminal in an aforementioned embodiment using two opposite ends of a stylus, the method including:
Step 201: setting corresponding operation information, wherein the corresponding operation information indicates an operation corresponding to a respective end of two opposite ends of the stylus when the respective end makes contact with a touch screen of the terminal body.
Step 202: obtaining identifying information and movement information of the stylus, wherein, the identifying information identifies a contacting end of the two opposite ends that is making contact with the touch screen, and the movement information of the stylus includes a location of a point of contact and a track of the contacting end on the screen obtained when the contacting end of the stylus makes contact with the touch screen.
Step 203: responding with an operation corresponding to the contacting end of the stylus according to the corresponding operation information, the identifying information and the movement information of the stylus, and displaying a result of the operation corresponding to the contacting end of the stylus.

Wherein, when a device other than the stylus makes contact with the touch screen, a contacting end of the device is identified as a forward end of the two opposite ends of the stylus.

Wherein, a forward end of the two opposite ends of the stylus includes one nib, and a back end of the two opposite ends of the stylus includes two nibs; and when the touch screen is a capacitive touch screen, the location of the point of contact where the back end of the stylus makes contact with the touch screen is taken as the location of a midpoint of a line connecting two points of contact.

Wherein, the stylus makes contact with the touch screen through writing, drawing, clicking or dragging.

An embodiment of inputting, by the stylus, different colours using two opposite ends will be described now, for a case where the two opposite ends of the stylus include one nib and two nibs, respectively.

Step 301: The corresponding operation information of the two opposite ends of the stylus is set to indicate switching of colours, that is, the operation corresponding to an input from the forward end is a black input, while the operation corresponding to an input from the back end is a red input.

Step 302: One end of the stylus makes contact with the touch screen.

Step 303: The identifying unit of the terminal detects a number of points of contact on the touch screen.

Step 304: The terminal determines whether or not the number of the points of contact is 1, if it is 1, the flow turns to step 305, otherwise the flow turns to step 306.

Step 305: An operation corresponding to the forward end of the two opposite ends of the stylus is performed, that is, if the operation is writing, the colour of the stroke is black.

Step 306: An operation corresponding to the back end of the two opposite ends of the stylus is performed, that is, if the operation is writing, the colour of the stroke is red.

It can be seen from the above embodiments that with the present disclosure, by configuring inputting operations of the two opposite ends of the stylus, both ends of the stylus are allowed to perform different operations, solving a problem in the relevant art that the two opposite ends of an existing stylus fail to operate in different modes, leading to more fun in using the stylus as well as an enhanced user experience. In addition, the anticipated effects may be achieved just by making minor modification to the conventional terminal without any major change of software and hardware. Therefore, the solution of the present disclosure has the advantages of a low cost and a simple structure.

Although preferable embodiments of the disclosure have been described for the sake of illustration, those skilled in the art will note that it is possible to make various modifications, additions and replacements. Therefore, the protection scope of the present disclosure is not limited to the above embodiments.

## Claims

1. A terminal comprising a terminal body and a stylus, the stylus having two opposite ends that are different from each other, and the terminal body comprising:
a setting unit configured to set corresponding operation information, wherein the corresponding operation information indicates an operation corresponding to a respective end of the two opposite ends of the stylus when the respective end makes contact with a touch screen of the terminal body;
an identifying unit configured to obtain identifying information, wherein the identifying information identifies a contacting end of the two opposite ends that is making contact with the touch screen;
a touch screen controlling unit configured to obtain movement information of the stylus, which movement information comprises a location of a point of contact and a track of the contacting end obtained when the contacting end of the stylus makes contact with the touch screen;
a processing unit configured to respond with an operation corresponding to the contacting end of the stylus according to the corresponding operation information, the identifying information and the movement information of the stylus; and
a displaying unit configured to display a result of the operation corresponding to the contacting end of the stylus.

2. The terminal according to claim 1, wherein the two opposite ends of the stylus have different shapes, sizes, numbers of nibs, or nib materials.

3. The terminal according to claim 1, wherein the touch screen is a resistive touch screen.

4. The terminal according to claim 1, wherein the touch screen is a capacitive touch screen.

5. A method for inputting to a terminal using two opposite ends of a stylus, comprising:
setting corresponding operation information, wherein the corresponding operation information indicates an operation corresponding to a respective end of the two opposite ends of the stylus when the respective end makes contact with a touch screen of the terminal body;
obtaining identifying information and movement information of the stylus, wherein the identifying information identifies a contacting end of the two opposite ends that is making contact with the touch screen, and the movement information of the stylus comprises a location of a point of contact and a track of the contacting end obtained when the contacting end of the stylus makes contact with the touch screen; and
responding with an operation corresponding to the contacting end of the stylus according to the corresponding operation information, the identifying information and the movement information of the stylus, and displaying a result of the operation corresponding to the contacting end of the stylus.

6. The method according to claim 5, further comprising:
when a device other than the stylus makes contact with the touch screen, identifying a contacting end of the device as a forward end of the two opposite ends of the stylus.

7. The method according to claim 5, wherein a forward end of the two opposite ends of the stylus comprises one nib, and a back end of the two opposite ends of the stylus comprises two nibs.

8. The method according to claim 7, wherein when the touch screen is a resistive touch screen, the obtained location of the point of contact is the location of a detected midpoint between two points of contact when the back end of the two opposite ends of the stylus makes contact with the touch screen.

9. The method according to claim 7, wherein when the touch screen is a capacitive touch screen, the obtained location of the point of contact is the calculated location of a midpoint of a line connecting two detected points of contact when the back end of the two opposite ends of the stylus makes contact with the touch screen.

10. The method according to any one of claims 5-9, wherein the contacting end of the stylus makes contact with the touch screen through writing, drawing, clicking or dragging.
